# EUROPÄISCHE PATENTSCHRIFT

(11) **EP 1 535 969 B1**
(45) Veröffentlichungstag und Bekanntmachung des Hinweises auf die Patenterteilung: **15.06.2011**
(21) Anmeldenummer: 04028161.0
(22) Anmeldetag: 26.11.2004
(51) Int. Cl.: C09B 23/00, C09B 57/02, G01N 33/58

(54) **Neue Polymethinfarbstoffe auf Cumarin-Basis mit einstellbarem Stoke's-Shift**
Coumarin based new polymethine dyes with adjustable Stoke's-Shift
Nouveaux colorants polymethine à base de coumarine avec Stoke's-Shift réglable

(30) Priorität: 26.11.2003 DE 10356130
(43) Veröffentlichungstag der Anmeldung: 01.06.2005
(73) Patentinhaber: Dyomics GmbH, 07745 Jena (DE)
(72) Erfinder: Wenzel, Matthias Dr., 07749 Jena (DE); Frank, Wilhelm Dr., 07743 Jena (DE); Schweder, Bernd Dr., 99425 Weimar (DE); Czerney, Peter Dr., 99425 Weimar (DE)
(74) Vertreter: Popp, Eugen

(56) Entgegenhaltungen:
- EP-A- 0 609 894
- EP-A- 0 747 700
- EP-A- 1 219 626
- EP-A- 1 318 177
- WO-A-00/53678
- WO-A-2004/063749
- DE-A1- 19 937 024
- JP-A- 8 179 467
- US-A- 2 945 033
- US-A- 3 892 807
- US-A- 3 931 215
- US-A- 3 974 172
- US-A- 4 001 130
- US-A- 5 627 027
- US-A1- 2003 135 058
- B.WETZL ET AL.: "Set of fluorochromophores in the wavelength range from 450 to 700 nm and suitable for labeling proteins and amino-modified DNA" J.CHROMATOGR..B, Bd. 793, 2003, Seiten 83-92, XP004438970
- M.S.SCHIEDEL ET AL.: "Single-Compound Libraries of Organic Materials: Parellel Synthesis and Screening of Fluorescent Dyes" ANGEW.CHEM.INT.ED., Bd. 40, Nr. 24, 2001, Seiten 4677-4680, XP002323070
- P.CZERNEY: "Heterocyclisch substituierte Cumarine aus beta-Chloropropen- iminiumsalzen" J.PRAKT.CHEM., Bd. 324, Nr. 2, 1982, Seiten 255-266, XP002323071
- N.FOKIALAKIS ET AL.: "Estrogenic Activity of Phenylpropanoids from Sarcomelicope Megistophylla and structure determination of a new norneolignan" PLANTA MED, Bd. 69, 2003, Seiten 565-568, XP009045848
- C.Y.CHEN ET AL.: "The absorption and the emission spectra of some substituted 3-Phenylcoumarins" HETEROCYCLES, Bd. 7, Nr. 2, 1977, Seiten 933-945, XP009045844

## Beschreibung

Die Erfindung betrifft sogenannte Fluoreszenzfarbstoffe (Fluorophore) auf der Basis von Polymethinen zur Verwendung in optischen, insbesondere fluoreszenzoptischen Bestimmungs- und Nachweisverfahren. Typische Verfahrensanwendungen beruhen auf der Reaktion von farbstoffmarkierten Antigenen, Antikörpern oder DNA-Segmenten mit der jeweils komplementären Spezies. Damit werden unter anderem Messungen von Enzymkinetiken, Rezeptor-Ligand-Interaktionen und Nucleinsäure-Hybridisierungskinetiken ermöglicht. Desweiteren sind die beanspruchten Fluorophore für die pharmakologische Charakterisierung von Rezeptoren oder Wirkstoffen interessant.

Einsatzmöglichkeiten ergeben sich dadurch beispielsweise in der Medizin und Pharmazie, in der Bio- und Materialwissenschaft, bei der Umweltkontrolle und dem Nachweis von in der Natur und Technik vorkommenden organischen und anorganischen Mikroproben sowie anderes mehr.

So sind beispielsweise bei P. Czerney, J. Prakt. Chem. 324/2, 255 (1982), Cumarine mit einem Absorptionsmaximum unterhalb von 400 nm offenbart.

Während Cyanine mit einem Stoke's-Shift von 20 - 40 nm als Fluoreszenzmarker seit langem bekannt sind (Cy3, Cy5, US-PS 5 627 027) gibt es bisher nur wenig Fluorophore mit einem großen Stoke's-Shift. Einige typische Beispiele hierfür sind die vom Laserfarbstoff DCM abgeleiteten Marker mit Absorptionsmaxima bei 481 nm und Emissionsmaxima bei 644 nm, die im US-PS 4 886 744 beansprucht sind, bzw. Verbindungen die in der europäischen Patetanmeldung EP 1318177 beansprucht sind.

Unterschiedliche Stilbene mit großem Stoke's-Shift wurden bisher in dem von F. Lehmann et al in "Dyes and Pigments", Elsevier Applied Science Publishers, Bd. 29, Nr. 1, 1995, Seiten 85-94, sowie in dem von G.J. Ashwell et al "Journal of Materials Chemistry", Cambridge, Bd. 11, Nr. 5, 2001, Seiten 1345-50, publizierten Artikeln beschrieben. Hydroxysubstituierte Stilbene mit einer Lactonverbrückung wurden bisher von R.M. El-Aal et al im "Journal of the Chinese Chemical Society", Taipei, Bd. 47, Nr. 2, 2000, Seiten 389-95 publiziert. Weitere in Betracht zu ziehende unterschiedliche Stilbene wurden von U.W. Grummt in "Sensors and Actuators B", Elsevier, Lausanne, Bd. 39, Nr. 1-3, 1997, Seiten 395-400; in der US-PS 6 096 794 sowie in der japanischen Patentschrift JP 07 2345504 publiziert.

Den meisten Verbindungen gemeinsam ist, daß sie keine reaktive Gruppe aufweisen, die die kovalente Anbindung an z.B. Biomoleküle gestattet. Ein weiterer Nachteil ist, dass die Löslichkeit in Wasser oder wässrigen Medien für Applikationen in der Bioanalytik nicht ausreichend ist. Solche Farbstoffe sind beispielsweise oben erwähnte Cumarine, wobei auch B. Wetzl et al., J. Chrom. B 793, 83 (2003) derartige Farbstoffe erwähnt.

Bei den Verbindungen, welche im Patent EP 1318177 beschrieben wurden, handelt es sich um Biomarker, die nur bei 488 nm anregbar sind und einen sehr großen Stokes-Shift aufweisen.

Der Erfindung liegt die Aufgabe zu Grunde, Fluoreszenzmarker auf der Basis von Polymethinen mit einstellbarem Stoke's-Shift, mit hoher Photo- und Lagerstabilität sowie hoher Fluoreszenzquantenausbeute zu schaffen. Diese Fluoreszenzmarker zeigen im Unterschied zu den in EP 1318177 beschriebenen einen dazu unterscheidbaren Stokes-Shift, was sie für Multicolor-Anwendungen prädestiniert. Weiterhin lassen sich Fluoreszenzmarker mit großem Stokes Shift erzeugen, welche im roten Spektralbereich anregbar sind und somit die Vorteile von rot anregbaren Fluoreszenzmarkern (z.B. Cy-5, DY-630) und den Fluoreszenzmarkern mit großem Stokes-Shift (beansprucht in EP 1318177) in sich vereinigen. Um ein optimales Signal/Rausch-Verhältnis zu erreichen, sollten die Emissionsbanden im Bereich > 520 nm liegen und die Anregung auf möglichst einfache Weise durch Weißlicht- oder Laser-Strahlung im UV- oder sichtbaren Spektralbereich realisiert werden. Die Fluorophore müssen eine vom pH-Wert und anderen Umwelteinflüssen unabhängig hohe Fluoreszenz aufweisen. Voraussetzung für die kovalente Anbindung ist das Vorhandensein einer reaktiven Funktion, die unter physiologischen Bedingungen bzw. unter den bei der Festphasensynthese von Biooligomeren üblichen Reaktionsbedingungen mit dem zu markierenden Biomolekül reagiert.

Die vorliegende Erfindung beschreibt Marker-Farbstoffe auf der Basis von Polymethinen der allgemeinen Formeln I oder II oder III oder IV 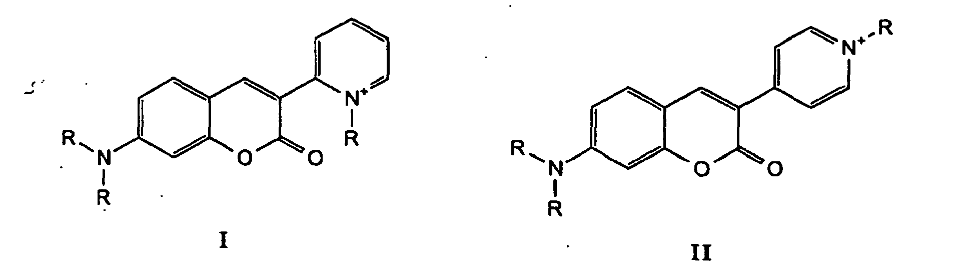 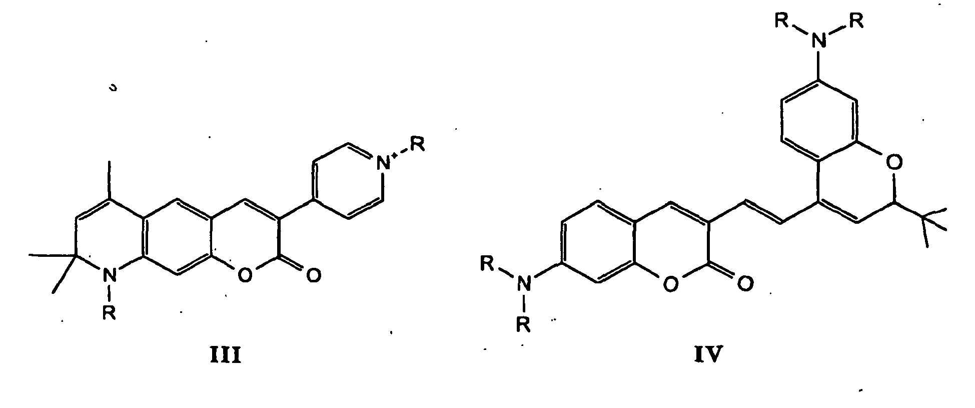
- wobei R für einen Alkyl-Rest steht und wobei einer der Reste R eine solubilisierende Gruppe, ausgewählt aus der Gruppe, die folgendes umfasst, aufweist: SO3-, PO32-, CO2-, O-, NR3+, Cyclodextrin und Zucker; und ein anderer Rest R eine reaktive Gruppe vom N-Hydroxysuccinimidester-Typ aufweist.
- die substituierten Polymethin-Derivate der allgemeinen Formeln I - IV als Farbstoffe zur optischen Markierung von Proteinen, Nukleinsäuren, Oligomeren, DNA, RNA, biologischen Zellen, Lipiden, Mono-, Oligo- und Polysaccariden, Liganden, Rezeptoren, Polymeren, Pharmaka oder Polymerpartikeln verwendet werden können,
- die substituierten Polymethin-Derivate der allgemeinen Formeln I - IV als Farbstoffe in Systemen zur qualitativen oder quantitativen Bestimmung von Proteinen, Nukleinsäuren, Oligomeren, DNA, RNA, biologischen Zellen, Lipiden, Polymeren, Pharmaka oder Polymerpartikeln über die funktionellen Gruppen an eine HO-, H₂N- oder HS-Funktion der zu bestimmenden Substanzen gekoppelt werden,
- die Kopplungsreaktion der substituierten Polymethin-Derivate der allgemeinen Formel I - IV in organischen oder wäßrigen Lösungen durchgeführt wird,
- die aus substituierten Polymethin-Derivaten der allgemeinen Formeln I - IV und Biomolekülen bestehenden Konjugate fluoreszierende Eigenschaften aufweisen,
- die substituierten Polymethin-Derivate der allgemeinen Formeln I - IV in optischen, insbesondere fluoreszenzoptischen qualitativen und quantitativen Bestimmungsverfahren einschließlich Immuntests, Hybridisierungsverfahren, chromatographischen oder elektrophoretischen Verfahren und im Hoch-Durchsatz-Screenings Verwendung finden,
- oder die substituierten Polymethin-Derivate der allgemeinen Formeln I - IV zur Analyse von Rezeptor-Liganden-Wechselwirkungen auf einem Mikroarray Verwendung finden.

Die Polymethine der allgemeinen Formeln I - IV können als Farbstoffe zur optischen Markierung von organischen oder anorganischen Erkennungseinheiten, z. B. von Aminosäuren, Peptiden, Proteinen, Antigenen, Haptenen, Enzymsubstraten, Enzym-Cofaktoren, Biotin, Carotinoiden, Hormonen, Neurohormonen, Neurotransmittern, Wachstumsfaktoren, Lympholocinen, Lectinen, Toxinen, Kohlenhydraten, Oligosacchariden, Polysacchariden, Dextranen, Nucleinsäuren, Oligonucleotiden, DNA, RNA, biologischen Zellen, Lipiden, rezeptorbindenden Pharmaka oder organischen bzw. anorganischen polymeren Trägermaterialien verwendet werden.

Außerdem ist die Fluoreszenzquantenausbeute der hier beschriebenen Verbindungen sensitiv gegenüber Proteinen, wodurch sie hervorragend für das nichtkovalente Anfärben von Proteinen (Proteinstain) geeignet sind.

Die Markierung der Erkennungseinheiten kann dabei durch die Ausbildung von ionischen Wechselwirkungen zwischen den Markern der allgemeinen Formeln I - IV und den zu markierenden Materialien erfolgen.

Weiterhin besteht auch die Möglichkeit, die Erkennungseinheit oder das Trägermaterial kovalent mit dem Fluorophor zu verbinden. Diese Kopplungsreaktion kann in wäßriger oder überwiegend wäßriger Lösung und vorzugsweise bei Raumtemperatur durchgeführt werden. Dabei entsteht eine Fluoreszenz-Sonde (Konjugat) zur qualitativen oder quantitativen Bestimmung von unterschiedlichen Biomaterialien bzw. anderen organischen und anorganischen Materialien.

Sowohl die Verbindungen der allgemeinen Formeln I - IV und davon abgeleitete Systeme können in optischen, insbesondere fluoreszenzoptischen, qualitativen und quantitativen Bestimmungsverfahren zur Diagnostik von Zelleigenschaften, in Biosensoren (*point of care-*Messungen), zur Erforschung des Genoms (DNA-Sequenzierung) und in Miniaturisierungstechnologien eingesetzt werden. Typische Anwendungen erfolgen in der Zytometrie und Zellsortierung, der Fluoreszenz-Korrelations-Spektroskopie (FCS), im *Ultra-High-Throughput-Screening* (UHTS), bei der *multicolor* Fluoreszenz-*in-situ*-Hybridisierung (FISH), als Proteinstain und in Mikroarrays (DNA- und Protein-Chips).

Dabei ist ein Mikroarray eine rasterartige Anordnung von auf mindestens einer Oberfläche immobilisierten Molekülen, die zum Studium von Rezeptor-Liganden-Wechselwirkungen verwendet werden können. Eine rasterartige Anordnung bedeutet mehr als zwei voneinander verschiedene Moleküle, welche sich innerhalb einer Fläche befinden und dort in unterschiedlichen, vorher definierten Regionen mit bekannter Position immobilisiert sind.

Ein Rezeptor ist ein Molekül, das eine Affinität zu einem gegebenen Liganden besitzt. Rezeptoren können natürlich vorkommende oder künstlich hergestellte Moleküle sein. Rezeptoren können in reiner Form oder gebunden an andere Spezies eingesetzt werden. Rezeptoren können kovalent oder nichtkovalent entweder direkt oder durch bestimmte Kopplungsvermittler an einen Bindungspartner angeknüpft werden.

Beispiele für Rezeptoren, die durch diese Erfindung detektiert werden können, schließen Agonisten und Antagonisten für Zell-Membran-Rezeptoren, Toxine und andere Giftstoffe, virale Epitope, Hormone wie Opiate und Steroide, Hormonrezeptoren, Peptide, Enzyme, Enzymsubstrate, als Kofaktoren agierende Wirkstoffe, Lektine, Zucker, Oligonukleotide, Nukleinsäuren, Oligosaccharide, Zellen, Zellfragmente, Gewebefragmente, Proteine und Antikörper ein, sind aber nicht auf die angeführten Stoffe beschränkt.

Ein Ligand ist ein Molekül, das von einem bestimmten Rezeptor erkannt wird. Beispiele für Liganden, die durch diese Erfindung detektiert werden können, schließen Agonisten und Antagonisten für Zell-Membran-Rezeptoren, Toxine und andere Giftstoffe, virale Epitope, Hormone wie Opiate und Steroide, Hormonrezeptoren, Peptide, Enzyme, Enzymsubstrate, als Kofaktoren agierende Wirkstoffe, Lektine, Zucker, Oligonukleotide, Nukleinsäuren, Oligosaccharide, Proteine und Antikörper ein, sind aber nicht auf die angeführten Stoffe beschränkt.

Durch die Darstellung von nichtsymmetrischen Polymethine, die einerseits als terminale Funktion einen leicht derivatisierbaren Heterocyclus vom Typ CH-acider Verbindungen, andererseits einen neuartig substituierten 6-Ringheterocyclus aufweisen, werden insbesondere nachfolgende Vorteile erreicht:

Bei geeigneter Substitution liegen die Absorptionsmaxima im Bereich der Emission der Laserwellenlänge vom Argon-Ion-Laser (488 nm) oder der gebräuchlichen Laserdioden bei 630 - 730 nm und die Emissionsmaxima werden im Bereich zwischen 510 und 710 nm, bzw. zwischen 660 und 820 nm beobachtet.

Ein weiterer Vorteil besteht darin, daß der hydrophile Charakter der unterschiedlich emittierenden Fluorophore nahezu identisch gestaltet werden kann.

### Ausführungsbeispiele

### Allgemeine Vorschrift 1

0,2 mmol substituierter Aldehyd und 0,2 mmol der entsprechenden substituierten CH-aciden Verbindung werden in 5 ml Methanol gelöst und mit 20 µl Piperidin versetzt. Die Mischung wird 10 Stunden am Rückfluß erhitzt, das Lösungsmittel entfernt und der Rückstand im Vakuum getrocknet. Die Reinigung erfolgt chromatografisch.

### Allgemeine Vorschrift 2

0.2 mmol des substituierten Cumarin-3-carbaldehyds bzw. Benzofuran-2-carbaldehyds und 0.2 mmol der entsprechenden CH-aciden Verbindung oder 0.2 mmol des substituierten 4-Hydroxy-cumarins als CH-aciden Verbindung und 0.2 mmol des entsprechenden Enolethers bzw. Enamins werden in 5ml Acetanhydrid am Rückfluss gekocht. Nach 10 Stunden wird abgekühlt und Ether zugegeben. Der entstandene Niederschlag wird isoliert und säulenchromatographisch gereinigt.

### Beispiel 1 (erfindungsgemäß)

### 4-{7-[(5-Carboxy-pentyl)-ethyl-amino]-2-oxo-2H-chromen-3-yl}-1-(3-propylsulfonato)-pyridinium Betain

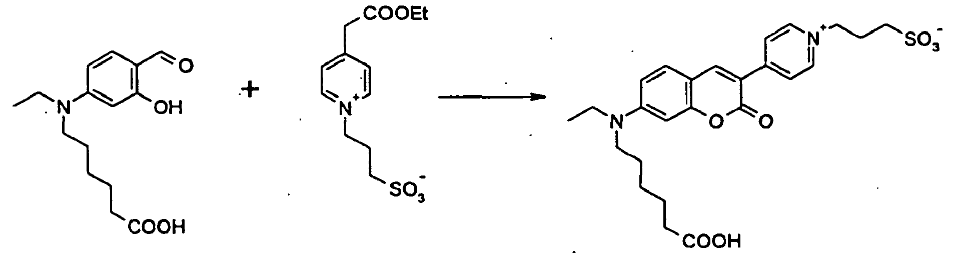

6-[Ethyl-(4-formyl-3-hydroxy-phenyl)-amino]-1-hexansäure und 4-Ethoxycarbonylmethyl-1-(3-propylsulfonato)-pyridinium Betain werden entsprechend der allgemeinen Vorschrift 1 umgesetzt.
Säulenchromatographie: SiO₂ (RP18), Eluent: Methanol/Wasser.
Ausbeute 22 mg (21 %) tiefrotes Pulver
MS (ESI-): 501 [M]⁻; 1003 [2M-H]⁻; MS (ESI+): 503 [M+H]⁺; 525 [M+Na]⁺; 547 [M-H+2Na]⁺ , UV-Vis (in Wasser): λₘₐₓ 482nm, λₑₘ 560nm, ε = 48.000 l/ mol * cm

### Beispiel 2 (erfindungsgemäß)

### 1-(5-Carboxy-pentyl)-4-[5,7,7-trimethyl-2-oxo-8-(3-propylsulfonato)-7,8-dihydro-2H-1-oxa-8-aza-anthracen-3-yl]-pyridinium Betain

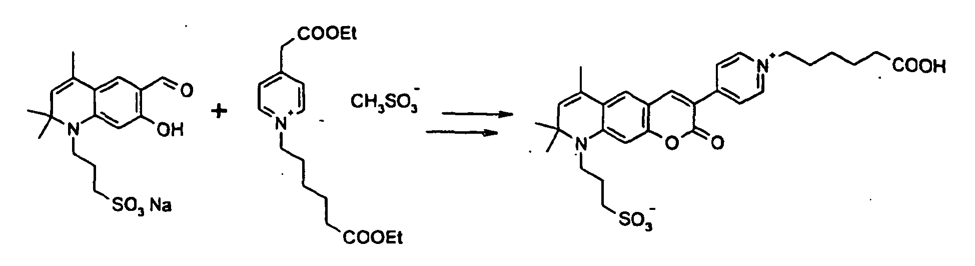

3-(6-Formyl-7-hydroxy-2,2,4-trimethyl-2H-chinolin-1-yl)-1-propansulfonat Na-Salz und N-(6-Carboxyethyl-hexyl)-4-pyridinium-essigsäureethylester Mesylat werden entsprechend der allgemeinen Vorschrift 1 umgesetzt.
Säulenchromatographie: SiO₂ (RP18), Eluent: Methanol/Wasser.
Ausbeute 18 mg (15 %) tiefrotes Pulver
MS (ESI-): 553 [M]⁻, MS (ESI+): 577 [M+Na]⁺; 599 [M-H+2Na]⁺, UV-Vis (in Wasser): λₘₐₓ 493nm, λ_{cm} 585nm, ε = 40.000 l/ mol * cm

### Beispiel 3 (erfindungsgemäß)

### 2-{7-[(5-Carboxy-pentyl)-ethyl-amino]-2-oxo-2H-chromea-3-yl}-1-(3-propylsulfonato)-pyridinium Betain

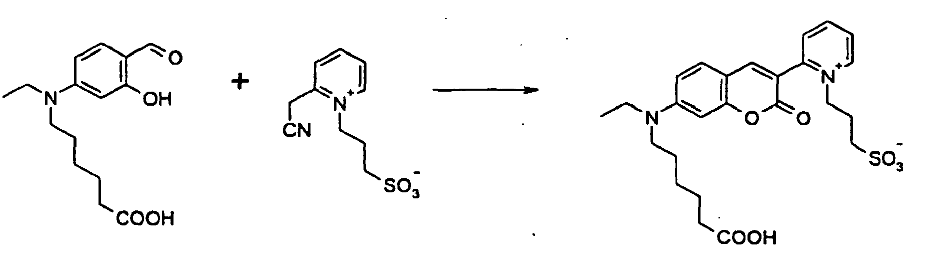

3-(6-Formyl-7-hydroxy-2,2,4-trimethyl-2H-chinolin-1-yl)-1-propansulfonat Na-Salz und N-(3-propylsulfonato)-2-pyridinium-acetonitril Betain werden entsprechend der allgemeinen Vorschrift 1 umgesetzt. Das Rohprodukt wird in einer Mischung aus 5 ml Wasser und 0,2 ml konz. HCl 3 Stunden am Rückfluß gekocht. Dann wird durch Zugabe von verd. NaOH neutralisiert, das Lösungsmittel entfernt und der Rückstand chromatografisch gereinigt. Säulenchromatographie: SiO₂ (RP18), Eluent: Methanol/Wasser.
Ausbeute 45 mg (48 %) orangegelbes Pulver
MS (ESI-): 501 [M-H]⁻; 523 [M-2H+Na]⁻, MS (ESI+): 525 [M+Na]⁺; 547 [M-H+2Na]⁺, UV-Vis (in Wasser): λₘₐₓ 440nm, λ_{cm} 494nm, ε = 40.000 l/ mol * cm

### Beispiel 4

### 3-(3-Carboxy-propyl)-2-[4-(7-diethylamino-4-hydroxy-2-oxo-2H-chromen-3-yl)-buta-1,3-dienyl]-3-methyl-5-sulfonato-1-(3-propylsulfonato)-3H-indolium Natrium-Salz

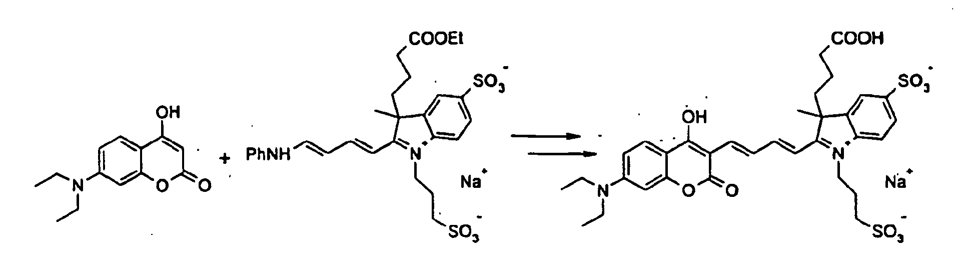

7-Diethylamino-4-hydroxy-cumarin und 3-(3-Ethoxycarbonyl-propyl)-3-methyl-2-(4-phenyl-amino-buta-1,3-dienyl)-5-sulfonato-1-(3-propylsulfonato)-3H-indolium Natrium-Salz werden entsprechend der allgemeinen Vorschrift 2 umgesetzt.
Säulenchromatographie: SiO₂ (RP18), Eluent: Methanol/Wasser.
Ausbeute 23 mg (15 %) tiefblaues Pulver
MS (ESI-): 350 (M²⁻/2), UV-Vis (in Wasser): λₘₐₓ 606nm, λ_{cm} 667nm

### Beispiel 5

### 1-(5-Carboxy-pentyl)-2-[4-(7-diethylamino-4-hydroxy-2-oxo-2H-chromen-3-yl)-buta-1,3-dienyl]-3,3-dimethyl-5-sulfonato-3H-indolium Betain

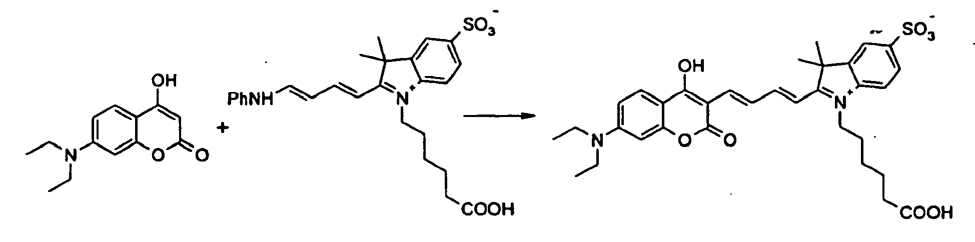

7-Diethylamino-4-hydroxy-cumarin und 1-(5-Catboxy-pentyl)-3,3-dimethyl-2-(4-phenyl-amino-buta-1,3-dienyl)-5-sulfonato-3H-indolium Betain werden nach der allgemeinen Vorschrift 2 umgesetzt.
Säulenchromatographie: SiO₂ (RP18), Eluent: Methanol/Wasser.
Ausbeute 20 mg (15 %) tiefblaues Pulver
MS (ESI-): 621 (M⁻); 643 [M-2H+Na]⁻, MS (ESI+): 667 [M-H+2Na]⁺, UV-Vis (in Wasser): λₘₐₓ 606nm, λ_{cm} 665nm, ε = 180.000 1/ mol * cm

### Beispiel 6

### 4-{7-[(5-Carboxy-pentyl)-ethyl-amino]-4-hydroxy-2-oxo-2H-chromen-3-ylmethylene}-6-diethylamino-1,2,3,4-tetrahydro-xanthenylium Perchlorat

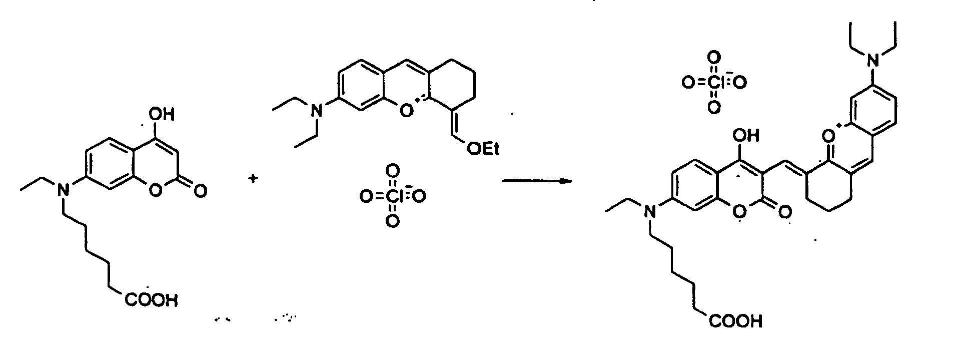

6-[Ethyl-(4-hydroxy-2-oxo-2H-chromen-7-yl)-amino]-hexanoic acid und 6-Diethylamino-4-ethoxymethylene-1,2,3,4-tetrahydro-xanthenylium Perchlorat werden entsprechend der allgemeinen Vorschrift 2 umgesetzt.
Säulenchromatographie: SiO₂, Eluent: Ethanol/Toluol.
Ausbeute 16 mg (12 %) dunkles Pulver
MS (ESI+): 585 (M⁺), UV-Vis (in Ethanol): λₘₐₓ 680nm, λₑₘ 707nm, ε = 160.000 l/ mol * cm

### Beispiel 7 (erfindungsgemäß)

### 2-tert-Butyl-4-(2-{7-[(5-carboxy-pentyl)-ethyl-amino]-2-oxo-2H-chromen-3-yl}-vinyl)-7-[ethyl-(3-propylsulfonato)-amino]-chromenylium Betain

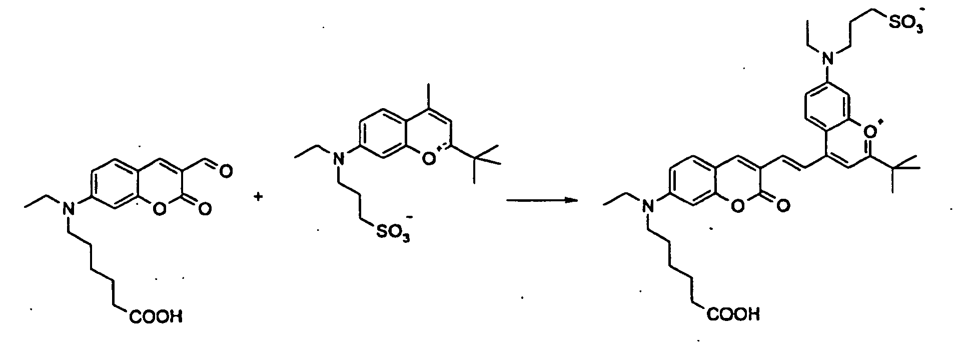

6-[Ethyl-(3-formyl-2-oxo-2H-chromen-7-yl)-amino]-1-hexansäure und 2-tert-Butyl-7-[ethyl-(3-propylsulfonato)-amino]-4-methyl-chromenylium Betain werden entsprechend der allgemeinen Vorschrift 2 umgesetzt.
Säulenchromatographie: SiO₂, Eluent: Ethanol/Toluol.
Ausbeute 56 mg (42 %) tiefblaues Pulver
MS (ESI+): 679 (M+H); 701 (M+Na); 723 (M-H+2Na), UV-Vis (in Ethanol): λₘₐₓ 631nm, λ_{cm} 722nm, ε = 65.000 l/ mol * cm

### Beispiel 8

### 4-tert-Butyl-7-diethylamino-2-(2-{7-[ethyl-(3-propylsulfonato)-amino]-2-oxo-2H-chromen-3-yl}-vinyl)-chromenylium Betain

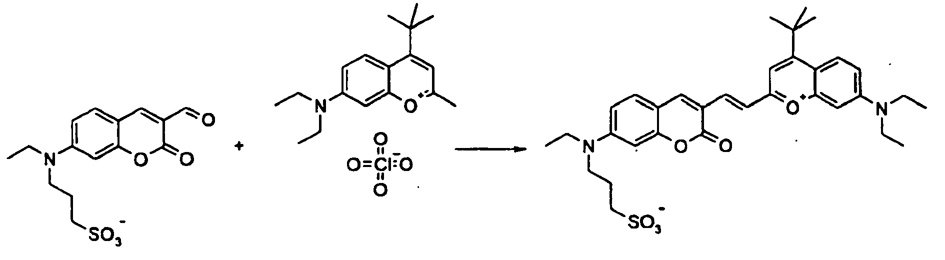

3-[Ethyl-(3-formyl-2-oxo-2H-chromen-7-yl)-amino]-1-propansulfonsäure Natrium-Salz und 4-tert-Butyl-7-diethylamino-2-methyl-chromenylium Perchlorat werden entsprechend der allgemeinen Vorschrift 2 umgesetzt.
Säulenchromatographie: SiO₂ , Eluent: Ethanol/Toluol.
Ausbeute 21 mg (18 %) tiefblaues Pulver
MS (ESI+): 592 (M+H); 615 (M+Na), UV-Vis (in Ethanol): λₘₐₓ 670nm, λ_{cm} 750nm, ε = 46.000 l/ mol * cm

### Beispiel 9

### 3-{7-[(5-Carboxy-pentyl)-ethyl-amino]-2-oxo-2H-chromen-3-ylmethylene}-6-diethylamino-9-phenyl-2,3-dihydro-1H-cyclopenta[b]chrdmenylium Tetraflubroborat

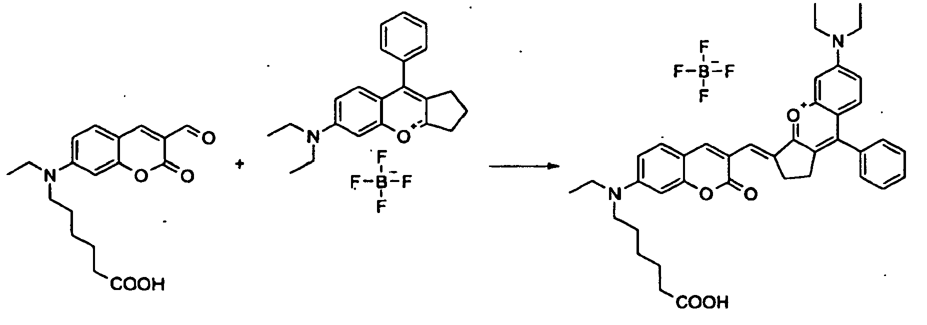

6-[Ethyl-(3-formyl-2-oxo-2H-chromen-7-yl)-amino]-1-hexansäure und 6-Diethylamino-9-phenyl-2,3-dihydro-1H-cyclopenta[b]chromenylium Tetrafluoroborat werden entsprechend der allgemeinen Vorschrift 2 umgesetzt.
Säulenchromatographie: SiO₂, Eluent: Ethanol/Toluol.
Ausbeute 12 mg (8 %) dunkles Pulver
MS (ESI+): 631 (M⁺), UV-Vis (in Ethanol): λₘₐₓ 704nm, λ_{cm} 800nm, ε = 42.000 1/ mol * cm

## Patentansprüche

1. Marker-Farbstoffe auf der Basis von Kumarinen der allgemeinen Formeln I - IV 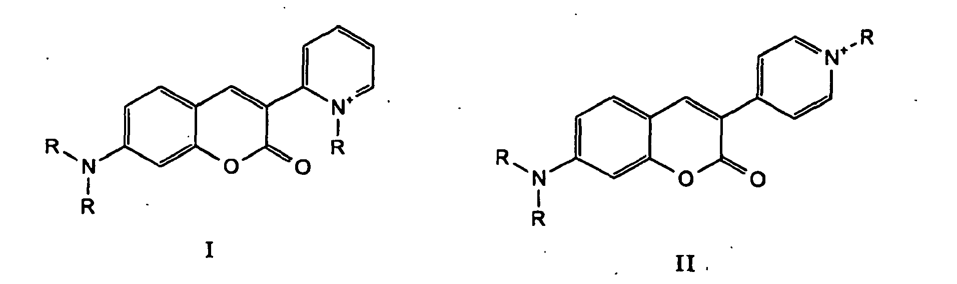 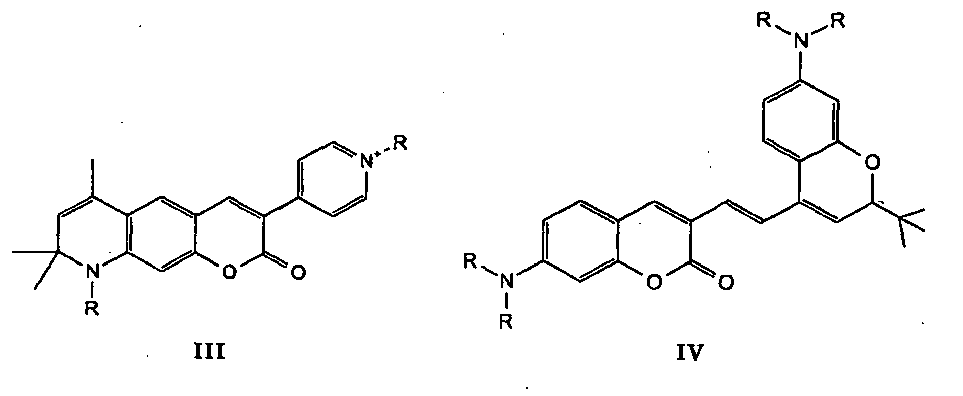 wobei
R für einen Alkyl-Rest steht und wobei einer der Reste R eine solubilisierende Gruppe, ausgewählt aus der Gruppe, die folgendes umfasst, aufweist: SO₃⁻, PO₃²⁻, CO2⁻, O⁻ , NR₃⁺, Cyclodextrin und Zucker; und ein anderer Rest R eine reaktive Gruppe vom N-Hydroxysuccinimidester-Typ aufweist.

2. Verwendung der substituierten Kumarin-Derivate der allgemeinen Formeln **I -** IV als Farbstoffe zur optischen Markierung von Proteinen, Nukleinsäuren, Oligomeren, DNA, RNA, biologischen Zellen, Lipiden, Mono-, Oligo- und Polysaccariden, Liganden, Rezeptoren, Polymeren, Pharmaka oder Polymerpartikeln.

3. System zur qualitativen oder quantitativen Bestimmung von Proteinen, Nukleinsäuren, Oligomeren, DNA, RNA, biologischen Zellen, Lipiden, Polymeren, Pharmaka oder Polymerpartikeln, **dadurch gekennzeichnet, dass** die funktionellen Gruppen der Verbindungen nach Anspruch 1 kovalent an eine HO-, H₂N- oder HS-Funktion der zu bestimmenden Substanzen gekoppelt werden.

4. System nach Anspruch 3, **dadurch gekennzeichnet, daß** die Kopplungsreaktion in organischen oder wässrigen Lösungen durchgeführt werden.

5. System nach Anspruch 3 und 4, **dadurch gekennzeichnet, daß** die kovalent gekoppelte Verbindung fluoreszierende Eigenschaften aufweist.

6. Verwendung der Verbindungen und Systeme nach Anspruch 1 bis 5 in optischen, inbesondere fluoreszenzoptischen qualitativen und quantitativen Bestimmungverfahren einschließlich Immuntests, Hybridisierungverfahren, DNA-Sequenzierung, chromatographischen oder elektrophoretischen Verfahren und im Hoch-Durchsatz-Screening.

7. Verwendung der in den Ansprüchen 1 bis 5 aufgeführten Verbindungen und Systeme zur Analyse von Rezptor-Liganden-Wechselwirkungen auf einem Mikroarray.

## Claims

1. Marker dyes based on coumarins of the general formulae I - IV 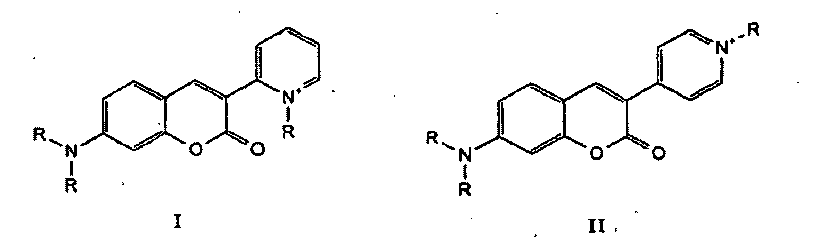 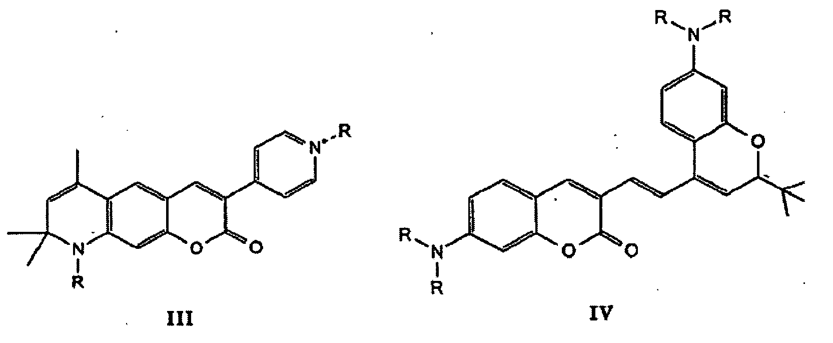 wherein
R is an alkyl radical and wherein one of the radicals R has a solubilising group selected from the group comprising the following: SO₃⁻, PO₃²⁻, CO₂⁻, O⁻, NR₃⁺, cyclodextrin and sugar; and a different radical R has a reactive group of the N-hydroxysuccinimide ester type.

2. Use of the substituted coumarin derivatives of the general formulae I - IV as dyes for the optical labelling of proteins, nucleic acids, oligomers, DNA, RNA, biological cells, lipids, mono-, oligo- and poly-saccharides, ligands, receptors, polymers, pharmaceuticals or polymer particles.

3. System for the qualitative or quantitative determination of proteins, nucleic acids, oligomers, DNA, RNA, biological cells, lipids, polymers, pharmaceuticals or polymer particles, **characterized in that** the functional groups of the compounds according to claim 1 are coupled covalently to an HO-, H₂Nor HS- function of the substances to be determined.

4. System according to claim 3, **characterized in that** the coupling reaction is carried out in organic or aqueous solutions.

5. System according to claim 3 and 4, **characterized in that** the covalently coupled compound has fluorescent properties.

6. Use of the compounds and systems according to claims 1 to 5 in optical, especially optical fluorescent, qualitative and quantitative determination processes including immune tests, hybridisation procedures, DNA sequencing, chromatographic or electrophoretic procedures and in high throughput screening.

7. Use of the compounds and systems mentioned in claims 1 to 5 in the analysis of receptor-ligand interactions on a microarray.

## Revendications

1. Colorants de marquage à base de coumarines de formule générale I à IV 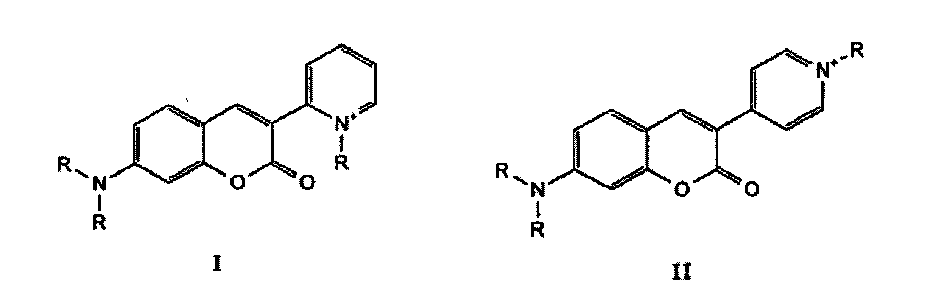 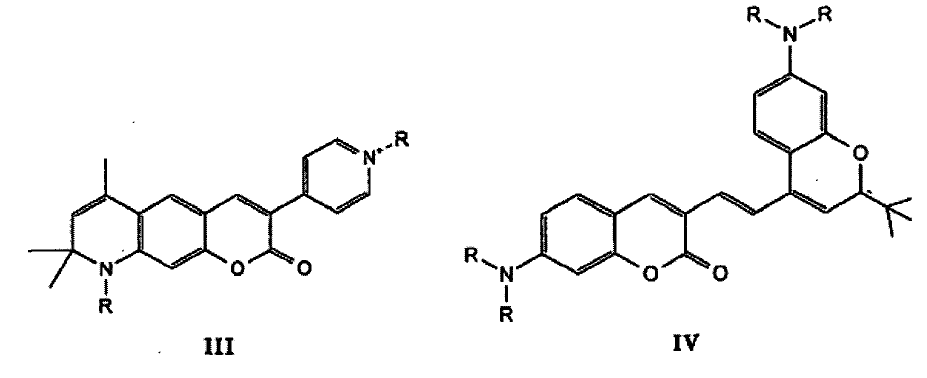 dans lesquelles
R représente un reste alkyle et l'un des restes R présente un groupe solubilisant choisi dans le groupe comprenant les radicaux SO3⁻, PO₃²⁻, CO₂⁻, O⁻, NR₃⁺, cyclodextrine et sucre ; et un autre reste R présente un groupe réactif de type ester de N-hydroxysuccinimide.

2. Utilisation des dérivés de coumarines substituées de formule générale I à IV comme colorants pour le marquage optique de protéines, acides nucléiques, oligomères, ADN, ARN, cellules biologiques, lipides, mono-, oligo- et polysaccharides, ligands, récepteurs, polymères, substances pharmaceutiques ou particules polymères.

3. Système de détermination qualitative ou quantitative de protéines, acides nucléiques, oligomères, ADN, ARN, cellules biologiques, lipides, polymères, substances pharmaceutiques ou particules polymères, **caractérisé en ce que** les groupes fonctionnels des composés de la revendication 1 sont couplés de manière covalente à une fonction HO, H₂N ou HS des substances à déterminer.

4. Système selon la revendication 3, **caractérisé en ce que** la réaction de couplage se fait dans des solutions organiques ou aqueuses.

5. Système selon la revendication 3 et la revendication 4, **caractérisé en ce que** le composé couplé de manière covalente présente des propriétés d'émission de fluorescence.

6. Utilisation des composés et des systèmes selon les revendications 1 à 5 dans des procédés optiques, en particulier par émission de fluorescence, de détermination qualitative et quantitative, y compris des tests immunologiques, des procédés d'hybridation, le séquençage d'ADN, des procédés de chromatographie ou d'électrophorèse, ainsi que dans le criblage à haut débit.

7. Utilisation des composés et des systèmes selon les revendications 1 à 5 pour l'analyse d'interactions récepteur/ligand sur un microréseau.
